# EUROPEAN PATENT SPECIFICATION

(11) **EP 4 155 805 B1**
(45) Date of publication and mention of the grant of the patent: **09.12.2026**
(21) Application number: 22193456.5
(22) Date of filing: 01.09.2022
(51) Int. Cl.: G02B 26/08, G06N 3/08, G06N 3/044, G06N 3/067

(54) **METHOD AND SYSTEM FOR CAMERA-FREE LIGHT FIELD VIDEO PROCESSING WITH ALL-OPTICAL NEURAL NETWORK**
VERFAHREN UND SYSTEM ZUR KAMERAFREIEN LICHTFELDVIDEOBEARBEITUNG MIT EINEM VOLLOPTISCHEN NEURONALEN NETZWERK
PROCÉDÉ ET SYSTÈME DE TRAITEMENT VIDÉO DE CHAMPS LUMINEUX SANS CAMÉRA AVEC UN RÉSEAU DE NEURONES ARTIFICIELS TOUT-OPTIQUE

(30) Priority: 27.09.2021 CN 202111138513
(43) Date of publication of application: 29.03.2023
(73) Proprietor: Tsinghua University, Beijing 100084 (CN)
(72) Inventor: FANG, Lu, Beijing, 100084 (CN); ZHOU, Tiankuang, Beijing, 100084 (CN); GU, Siyuan, Beijing, 100084 (CN); YUAN, Xiaoyun, Beijing, 100084 (CN); DAI, Qionghai, Beijing, 100084 (CN)
(74) Representative: Barbaro, Gaetano

(56) References cited:
- US-A1- 2022 164 634
- TIANKUANG ZHOU ET AL: "Large-scale neuromorphic optoelectronic computing with a reconfigurable diffractive processing unit", ARXIV.ORG, CORNELL UNIVERSITY LIBRARY, 201 OLIN LIBRARY CORNELL UNIVERSITY ITHACA, NY 14853, 26 August 2020 (2020-08-26), XP081748962
- FRANÇOIS DUPORT ET AL: "All-optical reservoir computing", OPTICS EXPRESS, vol. 20, no. 20, 24 September 2012 (2012-09-24), US, pages 22783, XP055256527, ISSN: 2161-2072, DOI: 10.1364/OE.20.022783

## Description

### TECHNICAL FIELD

The invention relates to the technical field of optical intelligent computing, and particularly to a light field intelligent processing method and apparatus for all-optical camera-free computing.

### BACKGROUND

An electronic solution is used in the existing imaging systems or visual signal processing technologies. In a word, photoelectric conversion is firstly implemented by a camera (photoelectric sensor), and further computations are performed on a silicon-based device (such as a personal computer PC). In such solution, the light emitted from a target scene is projected through an optical lens onto a photosensitive chip (i.e., a photodetector plane), so that an optical signal is converted into an electronic signal. The analog-to-digital conversion of the sensor is performed on the electronic signal again to obtain an electronic signal in a common data form (such as a video frame). The technology for obtaining such data based on frame is a mainstream of image and video processing.

In addition to the above mainstream technology, there is also a single-pixel compression imaging technology in a compressed sensing direction. Visual signals are compressed and collected by using a digital micro-mirror array in the single-photon imaging technology, so that two-dimensional signals are output as single-point one-dimensional signals. After the signals are compressed and collected, photoelectric conversion is immediately performed by the photodetector on the signals in the single-photon imaging technology without going through an optical calculation. This is because the imaging application output is in frame format for visualization.

There are researches on a similar structure in the related fields of sequential optical calculation, such as natural language processing and optical fiber communication. For example, in the existing literature, a natural language processing corpus is serialized and then input into a reservoir system (i.e., a variant of the recurrent neural network) composed of optical fiber loops, optical fiber delay is also used as a feedback mechanism of the recurrent neural network, and weight coupling is performed by signal modulation.

US 2022/164634A1 discloses an optical diffractive processing unit, which includes input nodes; output nodes; and neurons. A paper with the title of "Large-scale neuromorphic optoelectronic computing with a reconfigurable diffractive processing unit" proposes an optoelectronic reconfigurable computing paradigm by constructing a diffractive processing unit (DPU) that can efficiently support different neural networks and achieve a high model complexity with millions of neurons.

### SUMMARY

According to a first aspect of the invention, a light field intelligent processing system for all-optical camera-free video processing is defined in amended claim 1..

According to a second aspect of the invention, a light field intelligent processing method for all-optical camera-free video processing is defined in amended claim 8..

The method and system here realize light field video processing without the use of a camera and the whole system is all-optical, thus possessing the advantage in computing speed and energy-efficiency.

The additional aspects and advantages of the invention may be set forth in the following specification, and will become obvious from the following description, or may be learned by practice of the invention.

### BRIEF DESCRIPTION OF THE DRAWINGS

The above and/or additional aspects and advantages of the present invention may be obvious and easily understood in descriptions of embodiments in combination with figures.
FIG. 1 is an overall block diagram illustrating a light field intelligent processing system for all-optical camera-free video processing according to an embodiment of the invention.
FIG. 2 is a simplified structural schematic diagram illustrating a light field intelligent processing system for all-optical camera-free video processing according to an embodiment of the invention.
FIG. 3 is a structural schematic diagram illustrating a sensing module of the system according to an embodiment of the invention.
FIG. 4 is a structural schematic diagram illustrating a recurrent neural network (RNN) of the system according to an embodiment of the invention.
FIG. 5 is a schematic diagram illustrating computation of an optical fiber loop 2 according to an embodiment of the invention.
FIG. 6 is a flowchart illustrating a light field intelligent processing method for all-optical camera-free video processing according to an embodiment of the invention.

### DETAILED DESCRIPTION

Embodiments of the invention are described in detail below, and examples of embodiments are illustrated in the accompanying drawings, in which the same or similar reference numbers represent the same or similar elements or elements with the same or similar functions. The embodiments described below with reference to the drawings are exemplary, are intended to explain the present invention and are not to be construed as a limitation of the invention.

There are some disadvantages in the above related art. Firstly, since the existing image (video) processing technology follows an architecture of the photoelectric conversion combined with silicon-based calculation, the carrier of this technology is an electronic signal, which leads to not good power consumption and operation speed. Secondly, most of the image (video) processing technologies use frames as an input form of the calculation structure, which leads to a lot of information redundancy.

Hereinafter, a light field intelligent processing method and system for all-optical camera-free video processing according to an embodiment of the invention will be described with reference to the accompanying drawings.

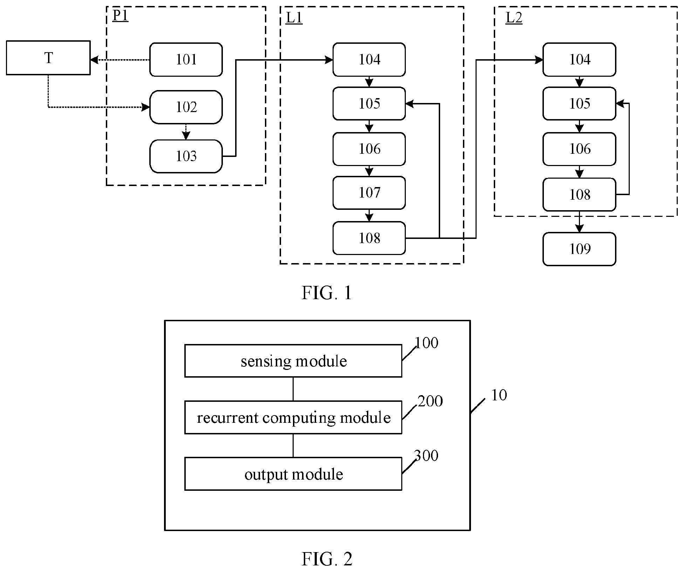

The invention proposes a photoelectric system in sensing-computing integration, which may be applied to video signal processing. The system framework is shown in FIG. 1. According to a signal transmission medium, the system is mainly divided into a sensing part P1, a recurrent computing part and an output part. The sensing part P1 includes a coherent source 101, a digital micro-mirror device (DMD) 102 and an optical fiber coupler 103. The recurrent computing part includes an optical fiber loop L1 and an optical fiber loop L2. The optical fiber loop L1 includes a modulator 104, an optical fiber amplifier 105, an optical fiber delay line 106, a nonlinear device 107 and an optical fiber coupler 108. The optical fiber loop L2 includes a modulator 104, an optical fiber amplifier 105, optical fiber delay lines 106, an optical fiber 108 and a photodetector/a relay optical fiber 109. The dotted arrow line indicates space light propagation. The solid arrow line indicates optical fiber propagation.

FIG. 2 is a light field intelligent processing system for all-optical camera-free video processing according to an embodiment of the invention. As shown in FIG. 2, the system 10 includes a sensing module 100, a recurrent computing module 200, and an output module 300.

The sensing module 100 is composed of a digital micro-mirror device and an optical fiber coupler and is configured to map a two-dimensional (2D) spatial optical signal into a one-dimensional (1D) input signal.

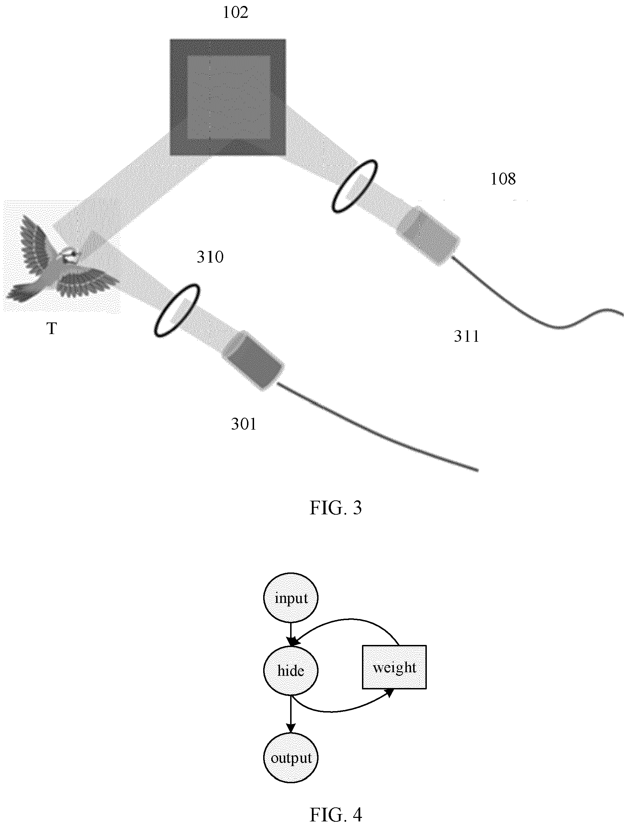

It may be understood that, the sensing part of the invention is composed of the digital micro-mirror device and the optical fiber coupler as shown in FIG. 3, for compressing the 2D spatial optical signal (coherent laser) into the 1D input signal. In an example, the coherent laser is emitted by a light source 301 (e.g., the coherent source). As shown in FIG. 3, the light emitted from the target scene T is projected through an optical lens 310 onto the DMD, and the coupler 108 is connected to an optical fiber 311.

In a specific case, a laser beam with a diameter of 2 mm is projected onto a target scene T, and the reflected light spot is aligned with the digital micro-mirror array (in which the pixel size is 10.8 µm and the resolution is 1920x1080). The digital micro-mirror device is equivalent to a mirror array with two directions (having positive and negative 12 degree angles relative to the base plane). Information of the target scene may be collected by arranging an orientation of the optical fiber coupler perpendicular to the normal of the tilted part (corresponding to a non-zero area in a mask) of the digital micro-mirror device or by looking for the zero-order main maximum of the reflected light spot.

Furthermore, for each conventional concept "video frame", a set of 256 masks are modulated on the digital micro-mirror, in which each mask is a binary pattern of 1920x1080, so as to obtain a compression feature with the length l =256. The information reflected by the target scene can be completely preserved in the compressed field. From the perspective of compression ratio, the data throughput is greatly reduced compared to a frame with the 1920x1080 resolution. The entire sensing process can be expressed in the equation (1). ${x}_{i} = \left〈{∅}_{i}, {F}_{t}\right〉$ (1) where Ø*ᵢ* represents a binary mask pattern, F*ₜ* represents an incident light intensity at the digital micro-mirror device (DMD) plane at time t, x*ᵢ* is the i-th component of an output vector, and <, > represents a coupling process from the pattern emitted from the DMD to the fiber.

It may be understood that, the difference between the sensing technology and the current mainstream electronic solution is mainly that, a combination of the digital micro-mirror device with the optical fiber coupler maps a 2D spatial signal into a 1D input signal in the invention, which is an all-optical process; while in the electronic solution, the spatial signal is converted into a computable signal usually through the photoelectric conversion, analog-to-digital conversion, serialization and other operations. Although mature digital computing chips can be configured to achieve flexible computations, they are not as good as the technical solution of the invention in terms of the power consumption and the response speed.

The recurrent computing module 200 is configured to realize a multiply-accumulate model in a recurrent neural network structure, and process the input signal to obtain the processed signal.

Specifically, the recurrent computing module 200 in the invention may include an optical fiber loop, a photodetector, a signal modulator, and a number of optical function elements (as shown in FIG. 1). A structure of the recurrent computing module 200 can be mathematically equivalent to a recurrent neural network (RNN). The basic structure of RNN may be expressed in the equations (2)-(3). ${h}^{t} = {f}_{NL} \left({W}_{f}⋅{h}^{t - 1}+{W}_{i}⋅{x}^{t}+b\right)$ (2) ${y}^{t} = {W}_{o} ⋅ {h}^{t}$ (3) where *h^{t}* represent a hidden state vector in the network at time t, *h*^{*t*-1} represent a hidden state vector in the network at time t-1, *x^{t}* represents an input vector of the network at time t, and *y^{t}* represents an output vector of the network at time t; *W* represents a corresponding weight, where. *wᵢ* is the input weight, *wₒ* is the output weight and *w_{f}* is the feedback weight. b represents a corresponding bias and *f_{NL}* represents a non-linear function.

In terms of device implementation, the two fiber optic loops 1&2 in FIG. 1 respectively perform recurrent connection and full connection operation of the input and output parts of the neural network. It is assumed that the weight **W** = *wᵢⱼ,* and ${h}_{k + 1}^{t} = {h}_{k}^{t} + \left({w}_{kj}⋅{x}_{j}\right)$*,* in which a time interval from k to k+1 corresponds to the time τ = L/c for the optical signal to completely pass through the fiber delay line, and a time interval from t to t+1 corresponds to Δt = l · τ, where L and c denote the fiber length and light speed respectively. Essentially in the time period (t, t+1), the modulator is configured to modulate the weight **W,** the input 1D signal x in the aforementioned sensing part is multiplied with the weight row by row, and the fiber delay line is configured to realize an addition of multiplication at each row in the time, finally achieving a calculation result equivalent to the weighting operation *W · x^{t}* or *W· h^{t}.*

Further, in conjunction with FIG. 1 and FIG. 4, each optical device realizes a part of functions in the system structure. The modulator is configured to generate a signal sequence w, and couple the signal sequence w with an input signal sequence x to obtain a signal w*x. The optical fiber amplifier is configured to gain the signal by compensating for attenuation of the signal during propagation in the optical fiber. The optical fiber delay line mainly provides delay. For example, the signal with a time interval of 0.1ms may be performed by optical fiber with length of 20-30km as it takes 0.1ms for the optical signal passes through the optical fiber. The coupler is responsible for splitting the light flow, a part of which is output directly and the other part of which is still circulated in the optical fiber loop structure. The non-linear device is configured to provide a non-linear response function by generally using a semiconductor optical amplifier (SOA), in which the curve of the non-linear response function is in a shape of saturated absorption.

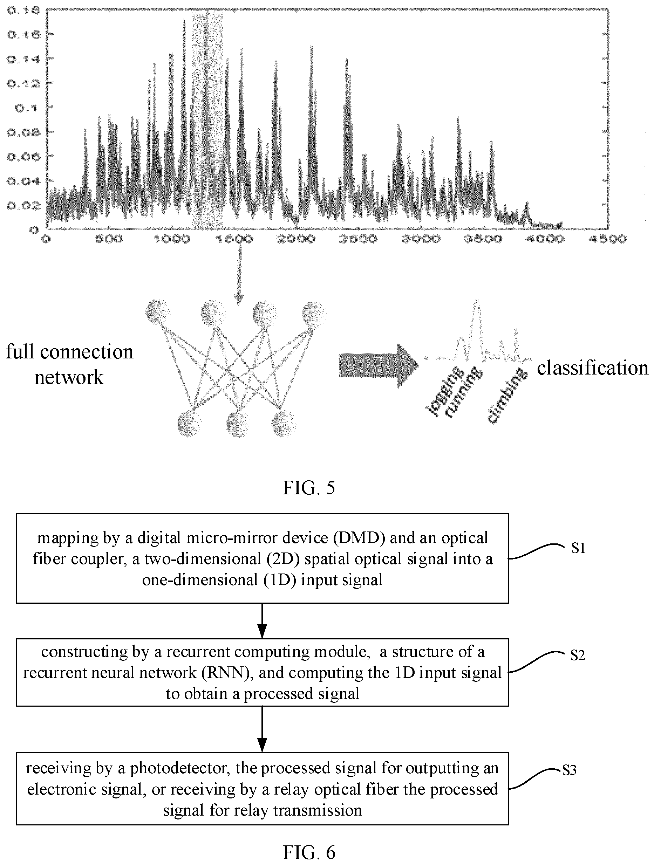

Further, as shown in FIG. 5, the optical fiber loop L2 performs full connection operation on the output vector of the optical fiber loop L1, and a classification result of the input image (frame) is obtained after performing maximum value judgment on the output vector.

It should be noted that in the computing part, the weight **W** modulated by the signal modulator needs to be generated by the neural network in a joint training way with the mask Ø modulated by the digital micro-mirror in the sensing part. For different training set, the weight modulated by the signal modulator is also different. The computing part in the invention aims to process the collected input signal to reduce data flux of the transmission link. Compared with the electronic solution relying on the silicon-based integrated circuit, since the invention adopts a design based on the optical fiber from the whole and realizes the multiply-accumulate model in the RNN structure, high-speed computations are supported and it is helpful to integration with communication systems.

The output module 300 includes a photodetector or a relay optical fiber, in which the photodetector is configured to collect the processed signal and output an electronic signal, and the relay optical fiber is configured to perform relay transmission of the processed signal.

It may be understood that the output module 300 in the invention is a signal output part. The photodetector can be directly connected to output the electronic signal. Alternatively, the long optical fiber with low loss can be connected for long-distance relay transmission, which is suitable for application scenarios such as large-throughput transmission in a data center or signal sensing in special environments.

According to the light field intelligent processing system for all-optical camera-free video processing in the embodiment of the invention, the sensing module is composed of the digital micro-mirror device and the optical fiber coupler, for mapping the 2D spatial light signal into the 1D input signal; the recurrent computing module realizes the multiply-accumulate model in the RNN structure and processes the input signal to obtain the processed signal; the output module includes the photodetector for receiving the processed signal and outputting the electronic signal, or a relay optical fiber for relay transmission of the processed signal. The invention proposes a light field imaging system based on the optical loop neural network which integrates sensing and intelligent calculation. Compared with the existing light field imaging system with separate sensing and calculation, the proposed system has a great improvement on the response speed, energy consumption, and transmission bandwidth.

As an example, the invention may use a photodetector signal as a trigger of the feedback signal in the RNN at the junction of the head and tail of the optical fiber for improving the signal-to-noise ratio.

As another example, the invention may use a single-layer loop to output an intermediate processing result and transmit the result to a back-end workstation for further calculation.

As another example, the DMD in this specification may be replaced with a fixed mask at the sensing end to reduce the cost.

In summary, the spatial optical signal of the invention is collected in a way of dimension reduction and compression, and the 2D spatial light intensity is converted into a 1D optical fiber signal through the DMD modulated mask. The principle of sensing module is adopted to reduce the bandwidth while ensuring the form of the optical signal continuous and avoiding the photoelectric conversion. The recurrent computing module is based on the optical fiber loop which realizes the RNN structure, which can be used as a general recurrent computing module and it is expected to realize a large-scale all-optical network computing system through cascade. In training and deploying the network structure, a large number of network parameters are involved in the entire system, including the pattern modulated by the DMD, the signal modulated by the modulator, and the working voltage of the optical fiber amplifier. The invention adopts a combination of random generation and gradient descent to construct a specific training set, and generates network parameters in a specific scene by training the RNN structure with the specific training set, to ensure credibility of the output of the calculation part. For example, in the case where the input is a human body action sequence, the accuracy rate of action classification output by the calculation part can reach more than 90%. In an embodiment, the network parameters are generated by a training module which is implemented by a processor.

The invention is aimed at application scenarios where a bandwidth is required but raw data is not strictly required, such as continuous automatic monitoring. The architecture proposed in the invention uses optical signals as carriers. The invention has advantages in some application scenarios that require relatively high response speed, such as industrial monitoring. In addition, the 2D visual signal in the invention is mapped to the 1D compressed form at the beginning of the collection/sensing part, so that the information of the target scene is kept to the greatest extent for processing by the calculation part, and the bandwidth transmission requirements of the entire system are thus reduced.

FIG. 6 is a flowchart illustrating a light field intelligent processing method for all-optical camera-free video processing according to an embodiment of the invention.

As shown in FIG. 6, the light field intelligent processing method includes the following steps at S1 to S3.

At S1, a two-dimensional 2D spatial optical signal is mapped into a one-dimensional 1D input signal by a sensing module with a digital micro-mirror device DMD and an optical fiber coupler.

At S2, a structure of a recurrent neural network (RNN) is realized by a recurrent computing module, and the 1D input signal is calculated to obtain a processed signal.

At S3, the processed signal is collected by a photodetector and an electronic signal is output, or the processed signal is collected by a relay optical fiber for relay transmission.

The light field intelligent processing method in the embodiment of the invention, the 2D spatial optical signal mapped into the 1D input signal by the combination of the DMD and the optical fiber coupler; the multiply-accumulate model in the RNN structure is realized, and the 1D input signal is processed to obtain the processed signal; the processed signal is collected by the photodetector and the electronic signal is output, or the processed signal is transmitted by the relay optical fiber. The invention proposes a light field imaging method based on the optical loop neural network which integrates sensing and intelligent calculation. Compared with the existing light field imaging method with separate sensing and computing, the proposed method has a great improvement on the response speed, energy consumption, and transmission bandwidth.

In addition, the terms "first" and "second" are only for describing purposes and are not to be construed as indicating or implying relative importance or implicitly indicating the number of technical features indicated. Thus, features limiting "first" and "second" may explicitly or implicitly include at least one of the features. In the description of the invention, the wording "a plurality of" means at least two, for example, two, three, unless otherwise expressly and specifically stated.

In the description of the specification, descriptions with reference to terms "an embodiment", "some embodiments", "example", "specific example" or "some examples" mean specific features, structures, materials or characteristics described in combination with the embodiment or example are included in at least an embodiment or example of the invention. In this specification, the schematic representations of the above terms do not have to be the same embodiment or example. Moreover, specific features, structures, materials or characteristics described may be combined in one or more embodiments or examples in a suitable manner. Furthermore, embodiments or examples described in the specification, as well as features of embodiments or examples, may be combined without conflicting with each other.

Although the embodiments of the invention have been illustrated and described above, it may be understood that the above-mentioned embodiments are exemplary and should not be construed as a limitation to the invention.

## Claims

1. Alight field intelligent processing system (10) for all-optical camera-free video processing, comprising a sensing module (100), a recurrent computing module (200) and an output module (300),
**characterized in that**,
the sensing module (100) has a digital micro-mirror device, DMD (102) and an optical fiber coupler (108), wherein the sensing module is configured to collect a two-dimensional, 2D, spatial optical signal, and map the 2D spatial optical signal into a one-dimensional, 1D, input signal through masks modulated by the DMD, so as to maintain the 1D input signal in an optical form;
the recurrent computing module (200) comprises an optical fiber loop L1 and an optical fiber loop L2, wherein the optical fiber loop L1 comprises a modulator (104), an optical fiber amplifier (105), an optical fiber delay line (106), a coupler (108), and a nonlinear device (107), the optical fiber loop L2 comprises a modulator (104), an optical fiber amplifier (105), an optical fiber delay line (106), and a coupler (108), and the recurrent computing module is configured to construct a recurrent neural network structure, and calculate the input signal to obtain a processed signal, in which the recurrent neural network structure is expressed as: ${h}^{t} = {f}_{NL} \left({W}_{f}⋅{h}^{t - 1}+{W}_{i}⋅{x}^{t}+b\right)$ ${y}^{t} = {W}_{o} ⋅ {h}^{t}$
where *h^{t}* represent a hidden state vector in the network at time t, *h*^{*t*-1} represent a hidden state vector in the network at time t-1, *x^{t}* represents an input vector of the network at time t, and *y^{t}* represents an output vector of the network at time t; W represents a corresponding weight, where *Wᵢ* is an input weight, *Wₒ* is an output weight, *W_{f}* is a feedback weight, b represents a corresponding bias and *f_{NL}* represents a non-linear function; and
the output module (300) comprises a photodetector or a relay optical fiber (109), in which the photodetector is configured to collect the processed signal to output an electronic signal, and the relay optical fiber is configured for relay transmission of the processed signal.

2. The system of claim 1, wherein the optical fiber loop (L1, L2) is configured to sequentially execute the recurrent neural network structure as a carrier for signal transmission and coupling.

3. The system of claim 1, wherein:
the modulator is configured to generate a signal sequence w, and couple the signal sequence w with an input signal sequence x to obtain a weighted signal w*x;
the optical fiber amplifier is configured to gain the optical signal by compensating for attenuation of the optical signal during propagation in the optical fiber;
the optical fiber delay line is configured to provide a delay by coupling a signal with a time interval;
the coupler is configured to split a light flow proportionally, so that a part of the light flow is directly output, and the remaining part of the light flow is circulated in the optical fiber loop; and
the non-linear device is configured to provide a non-linear response function, in which the curve of the non-linear response function is in a shape of saturated absorption.

4. The system of claim 3, wherein the recurrent computing module further comprises a training module for constructing a training set to train and deploy the recurrent neural network structure and generating network parameters.

5. The system of claim 4, wherein the network parameters in the training module include at least one of: a pattern modulated by the DMD, a signal modulated by the modulator, and a working voltage of the optical fiber amplifier.

6. The system of claim 5, wherein the recurrent computing module is further configured to generate the network parameters in a specific scene by constructing a specific training set in a way combining random generation and gradient descent.

7. The system of any one of claims 1 to 2, wherein the recurrent computing module further comprises a training module for constructing a training set to train and deploy the recurrent neural network structure and generating network parameters.

8. A light field intelligent processing method for all-optical camera-free video processing, performed by the system according to any one of claims 1 to 7, the method comprising:
mapping (S1) by the combination of the digital micro-mirror device (DMD) and the optical fiber coupler, the two-dimensional, 2D, spatial optical signal into the one-dimensional, 1D, input signal;
constructing (S2) the additive-multiplicative model in the recurrent neural network structure, and computing the input signal to obtain the preprocessed signal; and
receiving (S3) by the photodetector, the preprocessed signal for outputting the electronic signal, or receiving by the relay optical fiber the preprocessed signal for relay transmission.

## Patentansprüche

1. Intelligentes Lichtfeldverarbeitungssystem (10) für eine volloptische kamerafreie Videoverarbeitung, umfassend ein Erfassungsmodul (100), ein Modul (200) für rekurrentes Rechnen und ein Ausgabemodul (300),
**dadurch gekennzeichnet, dass**
das Erfassungsmodul (100) eine digitale Mikrospiegelvorrichtung, DMD (102), und einen faseroptischen Koppler (108) aufweist, wobei das Erfassungsmodul konfiguriert ist, um ein zweidimensionales, 2D, räumliches optisches Signal zu erhalten und das räumliche optische 2D-Signal über Masken, die durch die DMD moduliert sind, in ein eindimensionales Eingangssignal, 1D-Eingangssignal, abzubilden, um das 1D-Eingangssignal in einer optischen Form zu halten;
das Modul (200) für rekurrentes Rechnen eine faseroptische Schleife L1 und eine faseroptische Schleife L2 umfasst, wobei die faseroptische Schleife L1 einen Modulator (104), einen faseroptischen Verstärker (105), eine faseroptische Verzögerungsleitung (106), einen Koppler (108) und eine nichtlineare Vorrichtung (107) umfasst, die faseroptische Schleife L2 einen Modulator (104), einen optischen Faserverstärker (105), eine faseroptische Verzögerungsleitung (106) und einen Koppler (108) umfasst, und das Modul für rekurrentes Rechnen konfiguriert ist, um eine rekurrente neuronale Netzwerkstruktur zu konstruieren und das Eingangssignal zu kalkulieren, um ein verarbeitetes Signal zu erhalten, in dem die rekurrente neuronale Netzwerkstruktur ausgedrückt wird als: ${h}^{t} = {f}_{NL} \left({W}_{f}⋅{h}^{t - 1}+{W}_{i}⋅{x}^{t}+b\right)$ ${y}^{t} = {W}_{o} ⋅ {h}^{t}$
wobei *h^{t}* einen verborgenen Zustandsvektor in dem Netzwerk zu einem Zeitpunkt t darstellt, *h*^{*t*-1} einen verborgenen Zustandsvektor in dem Netzwerk zu dem Zeitpunkt t-1 darstellt, *x^{t}* einen Eingangsvektor des Netzwerks zu dem Zeitpunkt t darstellt und *y^{t}* einen Ausgangsvektor des Netzwerks zu dem Zeitpunkt t darstellt; W ein entsprechendes Gewicht darstellt, wobei *Wᵢ* ein Eingangsgewicht ist, *Wₒ* ein Ausgangsgewicht ist, *W_{f}* ein Rückkopplungsgewicht ist, b einen entsprechenden Bias darstellt und *f_{NL}* eine nichtlineare Funktion darstellt; und
das Ausgabemodul (300) einen Photodetektor oder eine optische Relaisfaser (109) umfasst, wobei der Photodetektor konfiguriert ist, um das verarbeitete Signal zu erhalten, um ein elektronisches Signal auszugeben, und die optische Relaisfaser für eine Relaisübertragung des verarbeiteten Signals konfiguriert ist.

2. System nach Anspruch 1, wobei die faseroptische Schleife (L1, L2) konfiguriert ist, um die rekurrente neuronale Netzwerkstruktur als einen Träger für eine Signalübertragung und -kopplung sequenziell auszuführen.

3. System nach Anspruch 1, wobei:
der Modulator konfiguriert ist, um eine Signalsequenz w zu erzeugen und die Signalsequenz w mit einer Eingangssignalsequenz x zu koppeln, um ein gewichtetes Signal w*x zu erlangen;
der faseroptische Verstärker konfiguriert ist, um das optische Signal durch Kompensieren einer Dämpfung des optischen Signals während einer Ausbreitung in der optischen Faser zu verstärken;
die faseroptische Verzögerungsleitung konfiguriert ist, um eine Verzögerung durch Kopplung eines Signals mit einem Zeitintervall bereitzustellen;
der Koppler konfiguriert ist, um einen Lichtstrom proportional aufzuteilen, sodass ein Teil des Lichtstroms direkt ausgegeben wird und der verbleibende Teil des Lichtstroms in der faseroptischen Schleife zirkuliert; und
die nichtlineare Vorrichtung konfiguriert ist, um eine nichtlineare Antwortfunktion bereitzustellen, wobei die Kurve der nichtlinearen Antwortfunktion die Form einer gesättigten Absorption hat.

4. System nach Anspruch 3, wobei das Modul für rekurrentes Rechnen ferner ein Trainingsmodul zum Erstellen eines Trainingssets, um die rekurrente neuronale Netzwerkstruktur zu trainieren und einzusetzen, und Erzeugen von Netzwerkparametern umfasst.

5. System nach Anspruch 4, wobei die Netzwerkparameter in dem Trainingsmodul mindestens eines einschließen von: einem Muster, das durch das DMD moduliert ist, einem Signal, das durch den Modulator moduliert ist, und einer Arbeitsspannung des faseroptischen Verstärkers.

6. System nach Anspruch 5, wobei das Modul für rekurrentes Rechnen ferner konfiguriert ist, um die Netzwerkparameter in einer spezifischen Szene durch Erstellen eines spezifischen Trainingssets auf eine Weise, die Zufallserzeugung und Gradientenabstieg kombiniert, zu erzeugen.

7. System nach einem der Ansprüche 1 bis 2, wobei das Modul für rekurrentes Rechnen ferner ein Trainingsmodul zum Erstellen eines Trainingssets, um die rekurrente neuronale Netzwerkstruktur zu trainieren und einzusetzen, und Erzeugen von Netzwerkparametern umfasst.

8. Intelligentes Lichtfeldverarbeitungsverfahren für die rein optische kamerafreie Videoverarbeitung, das durch das System nach einem der Ansprüche 1 bis 7 durchgeführt wird, das Verfahren umfassend:
Abbilden (S1), durch die Kombination der digitalen Mikrospiegelvorrichtung (DMD) und des faseroptischen Kopplers, des zweidimensionalen, 2D, räumlichen optischen Signals in das eindimensionale Eingangssignal, 1D-Eingangssignal;
Erstellen (S2) des additiv-multiplikativen Modells in der rekurrenten neuronalen Netzwerkstruktur und Berechnen des Eingangssignals, um das vorverarbeitete Signal zu erhalten; und
Empfangen (S3), durch den Photodetektor, des vorverarbeiteten Signals zum Ausgeben des elektronischen Signals oder Empfangen, durch die optische Relaisfaser, des vorverarbeiteten Signals für die Relaisübertragung.

## Revendications

1. Système de traitement intelligent de champ lumineux (10) destiné à un traitement vidéo entièrement optique sans caméra, comprenant un module de captage (100), un module informatique récurrent (200) et un module de sortie (300),
**caractérisé en ce que**,
le module de captage (100) a un dispositif à micro-miroir numérique, DMD (102) et un coupleur de fibre optique (108), dans lequel le module de captage est configuré pour collecter un signal optique spatial à deux dimensions, 2D, et transposer le signal optique spatial 2D en un signal d'entrée unidimensionnel, 1D, par le biais de masques modulés par le DMD, de façon à maintenir le signal d'entrée 1D sous une forme optique ;
le module informatique récurrent (200) comprend une boucle de fibre optique L1 et une boucle de fibre optique L2, dans lequel la boucle de fibre optique L1 comprend un modulateur (104), un amplificateur à fibre optique (105), une ligne à retard de fibre optique (106), un coupleur (108), et un dispositif non linéaire (107), la boucle de fibre optique L2 comprend un modulateur (104), un amplificateur à fibre optique (105), une ligne à retard de fibre optique (106) et un coupleur (108), et le module informatique récurrent est configuré pour construire une structure de réseau neuronal récurrent, et calculer le signal d'entrée pour obtenir un signal traité, dans lequel la structure de réseau neuronal récurrent est exprimée en tant que : ${h}^{t} = {f}_{NL} \left({W}_{f}⋅{h}^{t - 1}+{W}_{i}⋅{x}^{t}+b\right)$ ${y}^{t} = {W}_{o} ⋅ {h}^{t}$
où les *h^{t}* représentent un vecteur d'état caché dans le réseau au temps t, les *h*^{*t*-1} représentent un vecteur d'état caché dans le réseau au temps t-1, *x^{t}* représente un vecteur d'entrée du réseau au temps t, et *y^{t}* représente un vecteur de sortie du réseau au temps t ; W représente un poids correspondant, où *Wᵢ* est un poids d'entrée, *Wₒ* est un poids de sortie, *W_{f}* est un poids de rétroaction, b représente un biais correspondant et *f_{NL}* représente une fonction non linéaire ; et
le module de sortie (300) comprend un photodétecteur ou une fibre optique relais (109), dans lequel le photodétecteur est configuré pour collecter le signal traité pour délivrer en sortie un signal électronique, et la fibre optique relais est configurée pour une transmission relais du signal traité.

2. Système selon la revendication 1, dans lequel la boucle de fibre optique (L1, L2) est configurée pour exécuter séquentiellement la structure de réseau neuronal récurrent en tant que support pour transmission et couplage de signal.

3. Système selon la revendication 1, dans lequel :
le modulateur est configuré pour générer une séquence de signal w, et coupler la séquence de signal w avec une séquence de signal d'entrée x pour obtenir un signal pondéré w*x ;
l'amplificateur à fibre optique est configuré pour amplifier le signal optique en compensant une atténuation du signal optique pendant une propagation dans la fibre optique ;
la ligne à retard de fibre optique est configurée pour fournir un retard par couplage d'un signal avec un intervalle de temps ;
le coupleur est configuré pour diviser un flux de lumière proportionnellement, de sorte qu'une partie du flux de lumière est directement délivrée en sortie, et la partie restante du flux de lumière est mise en circulation dans la boucle de fibre optique ; et
le dispositif non linéaire est configuré pour fournir une fonction de réponse non linéaire, dans lequel la courbe de la fonction de réponse non linéaire est sous une forme d'absorption saturée.

4. Système selon la revendication 3, dans lequel le module informatique récurrent comprend en outre un module d'entraînement permettant de construire un ensemble d'entraînement pour entraîner et déployer la structure de réseau neuronal récurrent et de générer des paramètres de réseau.

5. Système selon la revendication 4, dans lequel les paramètres de réseau dans le module d'entraînement comportent au moins l'un parmi : un motif modulé par le DMD, un signal modulé par le modulateur, et une tension de fonctionnement de l'amplificateur à fibre optique.

6. Système selon la revendication 5, dans lequel le module informatique récurrent est configuré en outre pour générer les paramètres de réseau dans une scène spécifique en construisant un ensemble d'entraînement spécifique d'une façon combinant une génération aléatoire et une descente de gradient.

7. Système selon l'une quelconque des revendications 1 à 2, dans lequel le module informatique récurrent comprend en outre un module d'entraînement permettant de construire un ensemble d'entraînement pour entraîner et déployer la structure de réseau neuronal récurrent et de générer des paramètres de réseau.

8. Procédé de traitement intelligent de champ lumineux destiné à un traitement vidéo entièrement optique sans caméra, mis en œuvre par le système selon l'une quelconque des revendications 1 à 7, le procédé comprenant :
la transposition (S1) par la combinaison du dispositif à micro-miroir numérique (DMD) et du coupleur de fibre optique, du signal optique spatial à deux dimensions, 2D, en le signal d'entrée unidimensionnel, 1D ;
la construction (S2) du modèle additif-multiplicatif dans la structure de réseau neuronal récurrent, et le calcul informatique du signal d'entrée pour obtenir le signal prétraité ; et
la réception (S3) par le photodétecteur, du signal prétraité pour la sortie du signal électronique, ou la réception par la fibre optique relais du signal prétraité pour une transmission relais.
